# EUROPÄISCHE PATENTANMELDUNG

(11) **EP 1 334 798 A1**
(43) Veröffentlichungstag der Anmeldung: **13.08.2003**
(21) Anmeldenummer: 02002926.0
(22) Anmeldetag: 09.02.2002
(51) Int. Cl.: B23Q 3/12, B23B 31/00

(54) **Verbindungsflansch-Vorrichtung**

(71) Anmelder: Blickle GmbH, 72419 Neufra / Hohenzollern (DE)
(72) Erfinder: Heck, Klaus, 72414 Rangendingen (DE)
(74) Vertreter: Kiessling, Christian

(57) **Zusammenfassung**

Bei einer Verbindungsflansch-Vorrichtung, insbesondere zum Ausrichten der Drehachse eines drehbar gelagerten Drehfutters, mit einem ersten Flanschteil (120) und einem zweiten Flanschteil (130), wird eine Einstellbarkeit der räumlichen Anordnung zwischen zwei zu verbindenden Bauteilen dadurch erreicht, dass das erste Flanschteil eine konvexe Oberfläche (121) und das zweite Flanschteil eine an diese konvexe Oberfläche angrenzende konkave Oberfläche (131) mit entsprechendem Krümmungsradius aufweist, und eine Verschiebeeinrichtung vorgesehen ist, mit der das erste Flanschteil bezüglich dem zweiten Flanschteil lösbar fixierbar verschiebbar ist.

## Beschreibung

Die Erfindung betrifft eine Verbindungsflansch-Vorrichtung mit einem ersten Flanschteil und einem zweiten Flanschteil.

Die erfindungsgemäße Verbindungsflansch-Vorrichtung ermöglicht allgemein das Einstellen oder Kompensieren eines azimutalen Winkels zwischen einem ersten und einem zweiten Flanschteil und ist insbesondere zum Ausrichten der Drehachse eines drehbar gelagerten Backenfutters vorgesehen.

Flanschverbindungen der eingangs genannten Art werden im Stand der Technik verwendet, um eine lösbar feste Verbindung zwischen zwei an die jeweiligen Flanschteile angrenzenden Bauteilen herzustellen. Derartige Verbindungen weisen jedoch den Nachteil auf, dass eine beliebige winkelige Anordnung oder eine Veränderung des räumlichen Winkels der miteinander zu verbindenden Bauteile nach Herstellung der Flanschverbindung nicht ermöglicht ist.

Aufgabe der Erfindung ist es deshalb, eine Flanschvorrichtung zu schaffen, mittels derer die räumliche Anordnung zwischen zwei zu verbindenden Bauteilen einstellbar ist und auch im Nachhinein fixierbar änderbar ist.

Für eine Vorrichtung der eingangs genannten Art wird diese Aufgabe dadurch gelöst, dass das erste Flanschteil eine konvexe Oberfläche und das zweite Flanschteil eine an diese konvexe Oberfläche angrenzende konkave Oberfläche mit entsprechendem Krümmungsradius aufweist, und eine Verschiebeeinrichtung vorgesehen ist, mit der das erste Flanschteil bezüglich dem zweiten Flanschteil lösbar fixierbar verschiebbar ist.

Bevorzugte Ausführungsformen der Erfindung sind Gegenstand der Unteransprüche.

Bei der erfindungsgemäßen Verbindungs-Flanschvorrichtung wird durch das Merkmal, dass das erste Flanschteil eine konvexe Oberfläche und das zweite Flanschteil eine an diese konvexe Oberfläche angrenzende konkave Oberfläche mit entsprechendem Krümmungsradius aufweist, und eine Verschiebeeinrichtung vorgesehen ist, mit der das erste Flanschteil bezüglich dem zweiten Flanschteil lösbar fixierbar verschiebbar ist, erreicht, dass ein azimutaler Winkel zwischen den beiden Flanschteilen dadurch einstellbar und somit änderbar ist, dass die konkave Oberfläche des zweiten Flanschteils verschiebbar entlang der konvexen Oberfläche des ersten Flanschteils ist, wobei das Ausmaß einer Reibung zwischen dem ersten und dem zweiten Flanschteil über die Verbindungsschrauben einstellbar ist. Bei Einbau der erfindungsgemäßen Verbindungs-Flanschvorrichtung in eine Drehbank ist deshalb ein Taumelschlag eines Werkstückes ausgleichbar.

Gemäß einer ersten bevorzugten Ausführungsform der erfindungsgemäßen Vorrichtung ist vorgesehen, dass die Verschiebeeinrichtung von einer Mehrzahl von Verbindungsschrauben gebildet ist, über die das erste und zweite Flanschteil miteinander verbunden sind.

In einem angezogenen Zustand der Verbindungsschrauben ist die Flanschverbindung dabei feststehend ausgebildet, wobei die an die betreffenden Flanschteile angrenzenden Bauteile in einem fest vorgegebenen Winkel zueinander stehen. Durch Lösen von einer oder mehr Verbindungsschrauben wird erreicht, dass die Reibung zwischen der konvexen Oberfläche des ersten Flanschteils und der konkaven Oberfläche des zweiten Flanschteils soweit abnimmt, dass die entsprechenden konkav und konvex ausgebildeten Oberflächen mutuell verschiebbar sind. Die konkav bzw. konvex ausgebildeten Oberflächen können dabei eine vorgegebene Profilierung aufweisen, um eine Winkeleinstellung in eine vorgegebene Richtung zu erleichtern. Die Profilierung kann dabei insbesondere mit im Abstand angeordneten Einrasteinrichtungen versehen sein.

Gemäß einer alternativen, mit obiger Ausführungsform jedoch auch kombinierbaren bevorzugten Ausführungsform der erfindungsgemäßen Vorrichtung ist vorgesehen, dass die Verschiebeeinrichtung als radial verstellbares Bauteil ausgebildet ist, das in einer Aussparung des zweiten Flanschteils verschiebbar gelagert ist. Das separate Bauteil ist dabei vorzugsweise zum Zweck einer radialen Positionierung in der Aussparung des zweiten Flanschteils über eine Mehrzahl von radial angeordneter Korrekturschrauben in radialer Richtung lösbar fixierbar.

Gemäß einer weiteren bevorzugten Ausführungsform der erfindungsgemäßen Vorrichtung ist vorgesehen, dass die konvexe Oberfläche des ersten Flanschteils als Kugeloberfläche mit positivem Krümmungsradius ausgebildet ist, und die konkave Oberfläche des zweiten Flanschteils als Kugelpfannenoberfläche mit negativem Krümmungsradius ausgebildet ist.

Die Kugelpfannenoberfläche des zweiten Flanschteils kann dabei an einem separaten, radial verstellbaren Bauteil ausgebildet sein, um mögliche Rundlauffehler, die bei einer Taumelschlagkorrektur entstehen könnten, auszugleichen. Gemäß dieser Ausführungsform ist das zweite Flanschteil in der Regel schon rundlaufgenau ausrichtbar, so dass gegebenenfalls auf eine Einzelbackenverstellung verzichtet werden kann. Das separate Bauteil ist dabei zum Zweck einer radialen Positionierung in einer Aussparung des zweiten Flanschteils über eine Mehrzahl von Korrekturschrauben, vorzugsweise drei, in radialer Richtung lösbar fixierbar.

Gemäß einer weiteren bevorzugten Ausführungsform der erfindungsgemäßen Vorrichtung ist vorgesehen, dass der Drehpunkt der Kugelpfanne des zweiten Flanschteils in einem Bereich von 5 mm bis 80 mm vor der Außenkante eines an den zweiten Flanschteil angrenzenden Backenfutters zu liegen kommt, wobei ein Bereich von 10 mm bis 50 mm vor der Außenkante eines an den zweiten Flanschteil angrenzenden Backenfutters bevorzugt ist und wobei sich ein Abstand von 30 mm vor der Außenkante eines an den zweiten Flanschteil angrenzenden Backenfutters als optimal erwiesen hat.

Gemäß einer weiteren bevorzugten Ausführungsform der erfindungsgemäßen Vorrichtung ist vorgesehen, dass das zweite Flanschteil integral mit dem Backenfutter ausgebildet ist. Alternativ kann das erste Flanschteil über Backenfutter-Montageschrauben mit dem Backenfutter verbunden sein.

Gemäß einer anderen bevorzugten Ausführungsform der erfindungsgemäßen Vorrichtung ist vorgesehen, dass bei dem Backenfutter eine Einzelbackeneinstellung ermöglicht ist.

Bei der erfindungemäßen Vorrichtung ist eine vorzugsweise ungrade Anzahl von Verbindungsschrauben vorgesehen, wobei sich insbesondere drei Verbindungsschrauben in der Praxis bewährt haben, jedoch auch beispielsweise fünf oder auch sechs Verbindungsschrauben denkbar sind. Auch eine Ausführungsform mit vier Verbindungsschrauben hat sich als sehr gut handhabbar erwiesen.

Die erfindungsgemäße Vorrichtung wird im folgenden anhand einer bevorzugten Ausführungsform erläutert, die in den Figuren der Zeichnung dargestellt ist. Darin zeigen:
- Fig. 1: eine erste bevorzugte Ausführungsform der erfindungsgemäßen Vorrichtung in einer Ansicht von schräg hinten;
- Fig. 2: die in Fig. 1 dargestellte bevorzugte Ausführungsform der erfindungsgemäßen Vorrichtung in einer Ansicht von schräg vorne;
- Fig. 3: die in Fig. 1 dargestellte bevorzugte Ausführungsform der erfindungsgemäßen Vorrichtung in einer die Kanten darstellenden Frontalsicht;
- Fig. 4: die in Fig. 1 dargestellte bevorzugte Ausführungsform der erfindungsgemäßen Vorrichtung in einer die Kanten darstellenden Seitensicht;
- Fig. 5: die in Fig. 1 dargestellte bevorzugte Ausführungsform der erfindungsgemäßen Vorrichtung in einer Querschnittssicht entsprechend der Schnittlinie AA der Figur 3;
- Fig. 6: die in Fig. 1 dargestellte bevorzugte Ausführungsform der erfindungsgemäßen Vorrichtung in einer Querschnittssicht entsprechend der Schnittlinie BB der Figur 3.

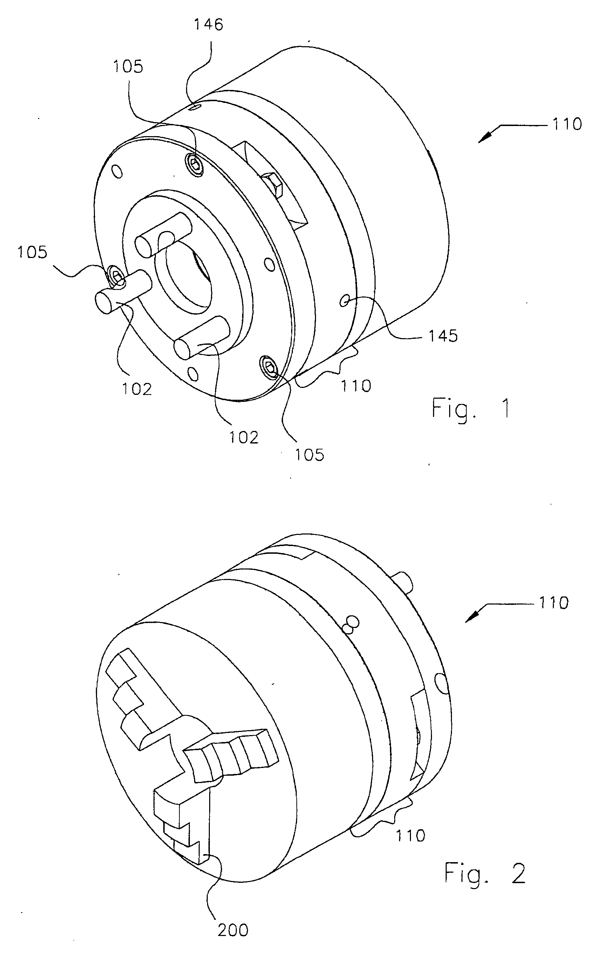

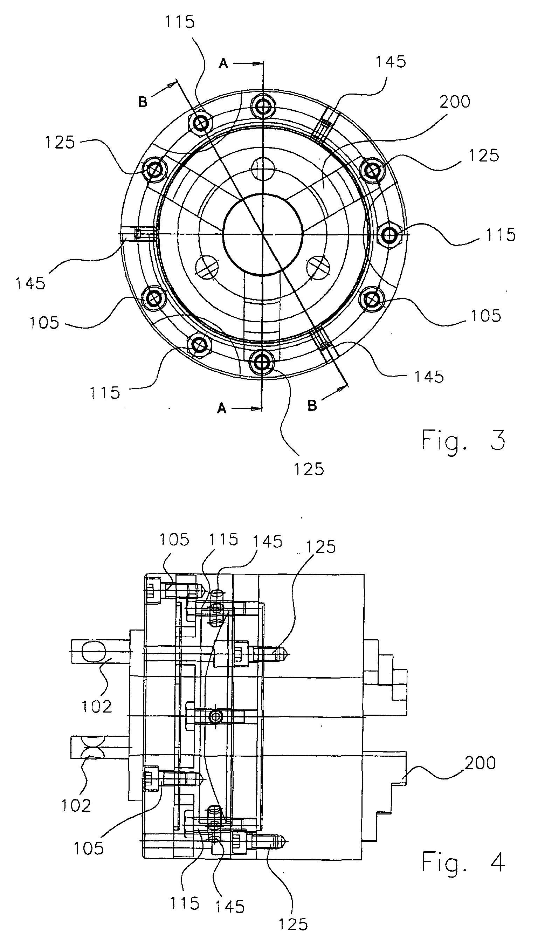

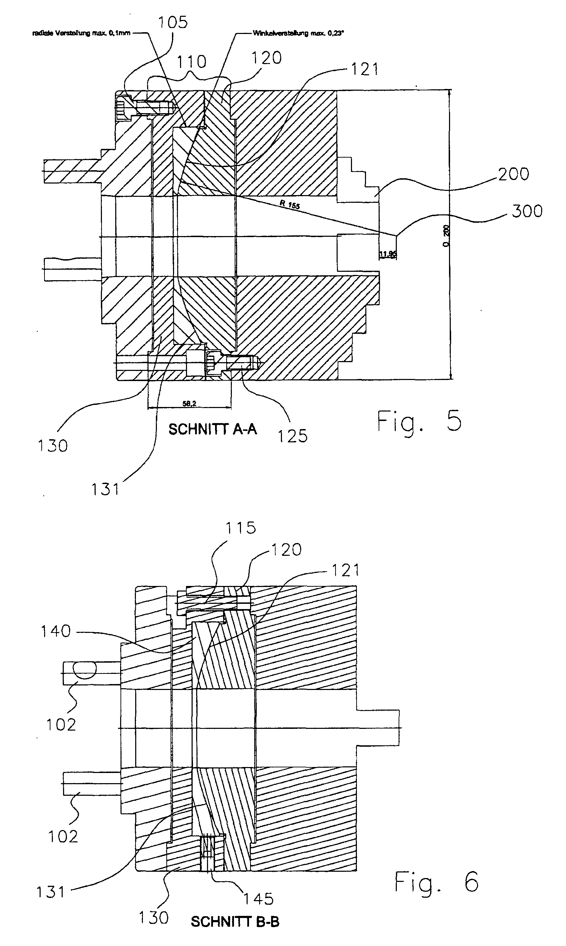

Die in den Figuren 1 bis 6 dargestellte erfindungsgemäße Verbindungsflansch-Vorrichtung 100 ist zum Ausrichten der Drehachse eines drehbar gelagerten Drehfutters vorgesehen und enthält einen Verbindungsflansch 110 mit einem ersten Flanschteil 120 und einen zweiten Flanschteil 130, die über eine Mehrzahl von Verbindungsschrauben 115 miteinander verbunden sind, wobei das erste Flanschteil 120, eine konvexe Oberfläche 121 und das zweite Flanschteil 130, 140 eine an diese konvexe Oberfläche 121 angrenzende konkave Oberfläche 131 aufweist.

Die konkave Oberfläche 131 des zweiten Flanschteils 130 ist an einem Bauteil 140 vorgesehen, das in einer hohlzylindrischen Aussparung des zweiten Flanschteils 130 gelagerten ist, wobei die dem Boden der Aussparung ferne Stirnfläche des Bauteils 140 als im wesentlichen konkav gekrümmte Kugelpfannen-Oberfläche 131 ausgebildet ist. Das Bauteil 140 ist dabei über drei Korrekturschrauben 145 in radialer Richtung verstellbaren, mit deren Hilfe eine lösbar feste und somit einstellbare radiale Positionierung des Bauteils 140 und damit der Kugelpfannenoberfläche 131 ermöglicht ist. Die Begrenzungswand des zweiten Flanschteils 130 zum Bauteil 140 ist so bemessen, dass sie aufgrund eines entsprechenden Spieles eine derartige Einstellung zulässt.

Das zweite Flanschteil 130 ist über drei antriebsseitige Montageschrauben 105 mit einer mit Stehbolzen 102 versehenen Antriebseinrichtung 101 verbunden. Das erste Flanschteil 120 der erfindungsgemäßen Vorrichtung 100 ist über drei Backenfutter-Montageschrauben 125 mit dem Backenfutter 200 verbunden. Des weiteren ist zu Verbindung der beiden Flanschteile 120, 130 ebenfalls eine ungrade Anzahl von nämlich drei Verbindungsschrauben 115 vorgesehen. Die Verbindungsschrauben 115 sind dabei als Verstellschrauben zum Ausgleichen eines Taumelschlages eines in einem Backenfutter 200 eingespannten nicht dargestellten beliebigen Drehteiles ausgebildet.

Die konvexe Oberfläche 121 des ersten Flanschteils 120 ist dabei annähernd als Kugeloberfläche mit positivem Krümmungsradius ausgebildet ist, und die konkave Oberfläche 131 der Kugelpfanne 140 des zweiten Flanschteils 130 ist annähernd als Kugelpfannenoberfläche mit negativem Krümmungsradius ausgebildet. Die konvexe Oberfläche 121 ist bei gelockerten Verbindungsschrauben 115 gegenüber der konkaven Oberfläche 131 verschiebbar. Mit Hilfe eine der Verbindungsschrauben 115 ist eine lösbar feste und somit einstellbare winkelige Positionierung der Längsachse des ersten Flanschteils 120 bezüglich der Längsachse des zweiten Flanschteils 130 und damit eine Feinjustierung zum Ausgleich eines Taumelschlages eines in dem Backenfutter 200 eingespannten Drehteiles ermöglicht. Die Begrenzungswand zwischen dem ersten Flanschteil 120 und dem zweiten Flanschteil 130 ist dabei so bemessen, dass sie aufgrund eines entsprechenden Spieles eine derartige Einstellung zulässt.

Der Drehpunkt 300 der Kugelpfanne 140 des zweiten Flanschteils 130 ist dabei in einem in einem Abstand von 12 mm vor der Außenkante des an den zweiten Flanschteil 131 angrenzenden Backenfutters 200 vorgesehen. Diese Entfernung gibt einen Krümmungsradius der Kugelpfannenoberfläche 131 vor, der eine schnelle und gleichwohl genaue Ausgleichsjustierung ermöglicht. Um eine Feineinstellung bei einem Taumelschlagausgleich zu ermöglichen ist zusätzlich bei dem Backenfutter 200 eine Einzelbackeneinstellung vorgesehen.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Verbindungsflansch-Vorrichtung, insbesondere zum Ausrichten der Drehachse eines drehbar gelagerten Drehfutters, mit einem ersten Flanschteil und einem zweiten Flanschteil, **dadurch gekennzeichnet, dass** das erste Flanschteil eine konvexe Oberfläche und das zweite Flanschteil eine an diese konvexe Oberfläche angrenzende konkave Oberfläche mit entsprechendem Krümmungsradius aufweist, und eine Verschiebeeinrichtung vorgesehen ist, mit der das erste Flanschteil bezüglich dem zweiten Flanschteil lösbar fixierbar verschiebbar ist.

2. Vorrichtung nach Anspruch 1, **dadurch gekennzeichnet, dass** die Verschiebeeinrichtung von einer Mehrzahl von Verbindungsschrauben gebildet ist, über die das erste und zweite Flanschteil miteinander verbunden sind.

3. Vorrichtung nach einem der vorhergehenden Ansprüche 1, **dadurch gekennzeichnet, dass** die Verschiebeeinrichtung als radial verstellbares Bauteil ausgebildet ist, das in einer Aussparung des zweiten Flanschteils verschiebbar gelagert ist.

4. Vorrichtung nach Anspruch 3, **dadurch gekennzeichnet, dass** das separate Bauteil zum Zweck einer radialen Positionierung in der Aussparung des zweiten Flanschteils über eine Mehrzahl von radial angeordneter Korrekturschrauben in radialer Richtung lösbar fixierbar ist.

5. Vorrichtung nach einem der vorhergehenden Ansprüche, **dadurch gekennzeichnet, dass** die Kugeloberfläche des ersten Flanschteils mit positivem Krümmungsradius ausgebildet ist und die konkave Oberfläche des zweiten Flanschteils als Kugelpfannenoberfläche mit negativem Krümmungsradius ausgebildet ist.

6. Vorrichtung nach einem der einem der vorhergehenden Ansprüche, **dadurch gekennzeichnet, dass** der Drehpunkt der Kugelpfanne des zweiten Flanschteils in einem Bereich von 5 mm bis 80 mm vor der Außenkante eines an den ersten Flanschteil angrenzenden Backenfutters zu liegen kommt.

7. Vorrichtung nach Anspruche 6, **dadurch gekennzeichnet, dass** der Drehpunkt der Kugelpfanne des zweiten Flanschteils in einem Bereich von 10 mm bis 50 mm vor der Außenkante eines an den ersten Flanschteil angrenzenden Backenfutters zu liegen kommt.

8. Vorrichtung nach Anspruch 6, **dadurch gekennzeichnet, dass** der Drehpunkt der Kugelpfanne des zweiten Flanschteils in einem Abstand von 12 mm vor der Außenkante eines an den ersten Flanschteil angrenzenden Backenfutters zu liegen kommt.

9. Vorrichtung nach einem der Ansprüche 1 bis 8, **dadurch gekennzeichnet, dass** das erste Flanschteil integral mit dem Backenfutter ausgebildet ist.

10. Vorrichtung nach einem der Ansprüche 1 bis 8, **dadurch gekennzeichnet, dass** das erste Flanschteil über Backenfutter-Montageschrauben mit dem Backenfutter verbunden ist.

11. Vorrichtung nach einem der vorhergehenden Ansprüche, **dadurch gekennzeichnet, dass** bei dem Backenfutter eine Einzelbackeneinstellung ermöglicht ist.

12. Vorrichtung nach einem der Ansprüche 1 bis 11, **dadurch gekennzeichnet, dass** eine ungrade Anzahl von Verbindungsschrauben vorgesehen ist.

13. Vorrichtung nach Anspruch 12, **dadurch gekennzeichnet, dass** drei Verbindungsschrauben vorgesehen sind.

14. Vorrichtung nach einem der Ansprüche 1 bis 11, **dadurch gekennzeichnet, dass** vier Verbindungsschrauben vorgesehen sind.

15. Vorrichtung nach einem der Ansprüche 1 bis 11, **dadurch gekennzeichnet, dass** sechs Verbindungsschrauben vorgesehen sind.

16. Vorrichtung nach einem der einem der vorhergehenden Ansprüche, **dadurch gekennzeichnet, dass** die Vorrichtung zum Ausgleich eines Taumelschlages eines zu bearbeitenden Werkstückes im Bereich eines Backenfutters in eine Drehbank eingebaut ist.

## Geänderte Patentansprüche

### Geänderte Patentansprüche gemäss Regel 86(2) EPÜ.

**1.** Verbindungs-Vorrichtung zum Ausrichten der Drehachse eines drehbar gelagerten Futters zum Aufnahmen eines zu bearbeitenden Werkstückes oder Werkzeuges, **dadurch gekennzeichnet, dass** das Futter zweiteilig aus einem ersten Teil mit einer konvexen Oberfläche und einen zweiten Teil mit einer an diese konvexe Oberfläche angrenzender konkaven Oberfläche mit entsprechendem Krümmungsradius zusammengesetzt, wobei die konvexe Oberfläche des ersten Teils als Kugeloberfläche mit positivem Krümmungsradius ausgebildet ist, und die konkave Oberfläche des zweiten Teils als Kugelpfannenoberfläche mit negativem Krümmungsradius ausgebildet ist, und eine Verschiebeeinrichtung vorgesehen ist, mit der das erste Teil bezüglich dem zweiten Teil lösbar fixierbar verschiebbar ist.
